# EUROPEAN PATENT SPECIFICATION

(11) **EP 2 498 567 B1**
(45) Date of publication and mention of the grant of the patent: **06.05.2015**
(21) Application number: 09851367.4
(22) Date of filing: 17.11.2009
(51) Int. Cl.: H04W 88/00, H04W 8/22, H04W 92/04, H04W 88/18

(54) **METHOD AND SYSTEM FOR ACQUIRING CAPABILITY INFORMATION OF A MOBILE TERMINAL FOR VOICE SERVICES OVER ADAPTIVE MULTI-USER CHANNELS ON ONE SLOT (VAMOS)**
VERFAHREN UND SYSTEM ZUR AKQUISITION VON UNTERSTÜTZUNGSINFORMATIONEN VON EINEM MOBILEN ENDGERÄT FÜR SPRACHE ÜBER ADAPTIVE MEHRBENUTZERKANÄLE AUF EINEM ZEITSCHLITZ (VAMOS)
PROCÉDÉ ET SYSTÈME D'ACQUISITION D'INFORMATIONS DE CAPABILITÉ D'UN TERMINAL MOBILE POUR SERVICES VOCAUX SUR CANAUX MULTI-UTILISATEURS ADAPTATIFS SUR UN SEUL INTERVALLE TÉMPOREL (VAMOS)

(43) Date of publication of application: 12.09.2012
(73) Proprietor: ZTE Corporation, Shenzhen, Guangdong 518057 (CN)
(72) Inventor: WANG, Xinhui, Guangdong 518057 (CN); LI, Jing, Guangdong 518057 (CN)
(74) Representative: Hannke, Christian
(86) International application number: PCT/CN2009/074993
(87) International publication number: WO 2011/060575

(56) References cited:
- CN-A- 1 672 454
- CN-A- 1 964 568
- CN-C- 1 141 005
- US-A1- 2007 224 990
- "Voice services over Adaptive Multi-user channels on One Slot", 3GPP DRAFT; GP-081949_WID_VAMOS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Miami, FL, USA; 20081117 - 20081121, 21 November 2008 (2008-11-21), XP050594314, [retrieved on 2008-11-21]

## Description

### TECHNICAL FIELD

The disclosure relates to a method and system for acquiring a capability supporting Voice services over Adaptive Multi-user channels on One Slot (VAMOS) of a mobile terminal by a base station subsystem during a call setup procedure in a VAMOS mode in a Global System for Mobile communications (GSM) system.

### BACKGROUND

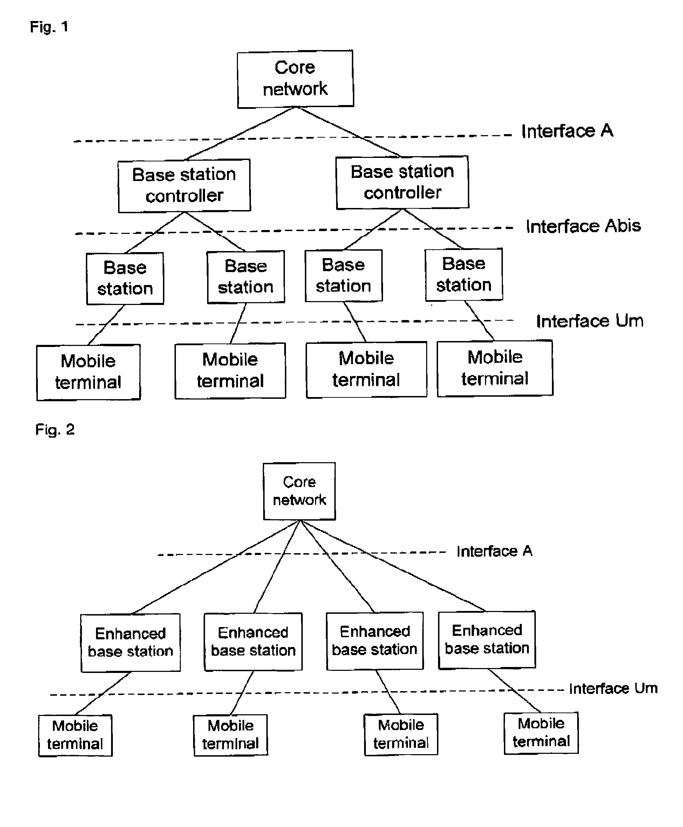

Fig. 1 shows a schematic diagram of a network architecture of a conventional GSM system. As shown in Fig. 1, the GSM system comprises three layers: a core network, a Base Station Controller (BSC) and a Base Station (BS). The BSC and the BS can be collectively referred to as a Base Station Subsystem (BSS), wherein an interface between the core network and the BSC is referred to as interface A, an interface between the BSC and the BS is referred to as interface Abis, and an interface between the BS and a Mobile Terminal (MT) is referred to as interface Um. The core network, the BSC and the BS operate cooperatively to provide a complete mobile voice service function to the MT.

With the development of technologies, there appeared a flattened GSM network architecture. Fig. 2 shows a schematic diagram of a network architecture of a flattened GSM system. As shown in Fig. 2, the flattened GSM network mainly comprises two layers: a core network and an enhanced Base Station (eBS), wherein an interface between the core network and the enhanced base station is referred to as interface A, an interface between the enhanced base station and a mobile terminal is referred to as interface Um; a new interface is defined between the enhanced base stations, which is referred to as the interface between the enhanced base stations configured to the interaction between the enhanced base stations. Although the network architecture of the conventional GSM system and the flattened GSM network architecture are the same in the behavior of the air interface, one of the advantages of the flattened GSM network architecture is to adopt the same architecture to operate cooperatively with a flattened enhanced High Speed Packet Access (HSPA+) or Long Term Evolution (LTE) network. The cooperative operation of the flattened GSM network and the HSPA+ or LTE network makes an operator desire to dynamically share limited spectrum resources in different wireless technologies (such as GSM, HSPA+, LTE and the like); wherein one of the possible application scenarios is that: the HSPA+ or LTE network takes up most of the spectrum resources, while the GSM network takes up a small part of the spectrum resources, however, the sharp decrease in the number of GSM users does not occur. Here, the GSM network needs to provide voice services to these users by relatively less spectrum resources. Huge challenge will be brought to the conventional GSM technology In order to adapt to this kind of operation manner due to the fact that the conventional GSM system is a Time Division Multi Access (TDMA) system, the capacity of which is limited by Time Slot (TS) resources, while one TS can bear one Full Rate (FR) voice user or two Half Rate (HR) voice users simultaneously.

With the development of technologies, there appeared many technologies to improve spectrum utilization efficiency, and a Voice services over Adaptive Multi-user channels on One Slot (VAMOS) technology is one of these technologies. The VAMOS technology allows two FR voice users or four HR voice users to be borne on one time slot simultaneously, so that the support to the capacity of voice user by the entire GSM network is improved without increasing spectrum resources.

During the use of the VAMOS technology, the base station subsystem needs to acquire whether the VAMOS technology is supported by the mobile terminal, however, the specific implementation solution is not given in the prior art. Thus, when the new VAMOS technology is introduced, the base station subsystem cannot distinguish whether the VAMOS technology is supported by the mobile terminal, thereby the VAMOS technology cannot be used reasonably.

"Voice services over Adaptive Multi-user channels on One Slot" 3GPP DRAFT; GP-081949_WID_VAMOS discloses "Voice capacity is Increased by multiplexing two users simultaneously on the same radio resource defined by a single time slot, specific ARFCN and specific sequence of TDMA frame numbers as defined for full rate and half rate GSM speech channels. The objective is to further enhance the voice capacity of GERAN by means of multiplexing two users simultaneously on the same radio resource both in downlink and in uplink."

US 2007/224990 A1 discloses "Techniques for transferring new capability Information in an efficient and backward compatible manner are described. A user equipment (UE) may send a new compatibility indicator to a wireless network to indicate that the UE has new capability information to send. This new capability indicator may be Implemented with a spare bit in an information element included in an initial message sent to the network. The network may be request for the information or indicate that it can receive the information. The UE may then send the new capability information to the network upon receiving the request or the indication. Alternatively, the network may convey that it supports transfer of new capability information, e.g. via a broadcast message or a unicast message, the UE may then send new capability information at any time to the network, without having to send the new capability indicator."

### SUMMARY

In view of this, the disclosure mainly aims to provide a method for acquiring a capability supporting VAMOS of a mobile terminal, so that a base station subsystem can distinguish whether a VAMOS technology is supported by the mobile terminal, thereby the VAMOS technology can be used reasonably.

The disclosure further aims to provide a system for acquiring a capability supporting VAMOS of a mobile terminal, so that a base station subsystem can distinguish whether a VAMOS technology is supported by the mobile terminal, thereby the VAMOS technology can be used reasonably.

The features of the method and system according to the present invention are defined in the independent claims, and the preferable features according to the present invention are defined in the dependent claims.

It can be seen from the technical solution provided by the disclosure that, the mobile terminal informs the base station subsystem of the support capability information about the VAMOS technology of Itself; the base station subsystem acquires the capability supporting the VAMOS technology of the mobile terminal according to the acquired support capability information. Through the method of the disclosure, the state of the mobile terminal for supporting the VAMOS technology is acquired by the base station subsystem according to the support capability information reported by the mobile terminal, so that the base station subsystem can distinguish whether the VAMOS technology is supported by the mobile terminal, thereby the VAMOS technology can be used reasonably, thus support to capacity of voice user by the entire GSM network is improved without increasing spectrum resources after the VAMOS technology is used by the GSM network.

### BRIEF DESCRIPTION OF THE DRAWINGS

Fig. 1 shows a schematic diagram of a network architecture of a conventional GSM system;
Fig. 2 shows a schematic diagram of a network architecture of a flattened GSM system;
Fig. 3 shows a flowchart of a method for acquiring a capability supporting VAMOS of a mobile terminal according to the disclosure;
Fig. 4 shows a composition schematic diagram of a system for acquiring a capability supporting VAMOS of a mobile terminal according to the disclosure;
Fig. 5 shows a flowchart of the first embodiment for acquiring a capability supporting VAMOS of a mobile terminal according to the disclosure;
Fig. 6 shows a flowchart of the second embodiment for acquiring a capability supporting VAMOS of a mobile terminal according to the disclosure; and
Fig. 7 shows a flowchart of the third embodiment for acquiring a capability supporting VAMOS of a mobile terminal according to the disclosure.

### DETAILED DESCRIPTION

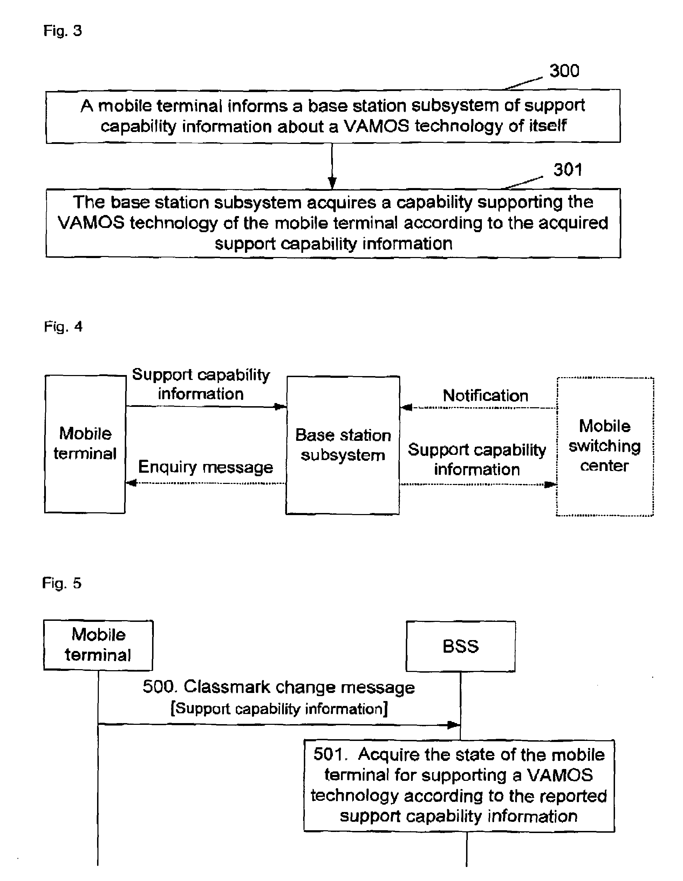

Fig. 3 shows a flowchart of a method for acquiring a capability supporting VAMOS of a mobile terminal according to the disclosure. As shown in Fig. 3, the method comprises the following steps.

Step 300: a mobile terminal informs a base station subsystem of support capability information about a VAMOS technology of itself.

The step can be implemented as follows:
if a network system uses an early classmark sending function, the mobile terminal reports the support capability information indicating whether the VAMOS technology is supported by itself to the base station subsystem as a field of mobile terminal classmark 3 via a current classmark change message; or
if the network system does not use an early classmark sending function, namely, in a dedicated mode, a core network, such as a Mobile Switching Center (MSC) can send a classmark request message to the base station subsystem aimed at the specific mobile terminal; after receiving the classmark request message, the base station subsystem sends a classmark enquiry message to the mobile terminal; after receiving the classmark enquiry message, the mobile terminal reports the support capability information, which indicates whether the VAMOS technology is supported by itself, to the base station subsystem as a field of the mobile terminal classmark 3 via the current classmark change message. After receiving the classmark change message, the base station subsystem sends a classmark update message to the MSC to report the state of the mobile terminal for supporting the VAMOS technology to the MSC; or
the mobile terminal reports the support capability information, which indicates whether the VAMOS technology is supported by itself, to the base station subsystem as a field of mobile terminal classmark 2 during a call setup procedure. Here, if the mobile terminal is a calling party, the support capability information is reported to the base station subsystem via a complete layer 3 message, such as a Call Management (CM) service request message; if the mobile terminal is a called party, the support capability information is reported to the base station subsystem via the complete layer 3 message, such as a paging response message.

Step 301: the base station subsystem acquires a capability supporting the VAMOS technology of the mobile terminal according to the acquired support capability information.

Through step 300, the base station subsystem acquires the state of the mobile terminal for supporting the VAMOS technology according to the support capability information reported by the mobile terminal, so as to perform the subsequent processing.

Furthermore, when the mobile terminal does not report the support capability information about the VAMOS technology, it can be assumed that the base station subsystem may judge that the mobile terminal does not support the VAMOS technology.

Based on the method of the disclosure, a system for acquiring a capability supporting VAMOS of a mobile terminal is further provided. Fig. 4 shows a composition schematic diagram of a system for acquiring a capability supporting VAMOS of a mobile terminal according to the disclosure. As shown in Fig. 4, the system at least comprises a mobile terminal and a base station subsystem;
the mobile terminal is configured to inform the base station subsystem of support capability information about a VAMOS technology of itself; and
the base station subsystem is configured to acquire whether the VAMOS technology is supported by the mobile terminal according to the support capability information reported by the mobile terminal.

The system according to the disclosure further comprises a Mobile Switching Centre (MSC), which is configured to send notification of requesting the support capability information about the VAMOS technology of the mobile terminal to the mobile terminal via the base station subsystem.

The mobile terminal is further configured to receive an enquiry message of the base station subsystem.

The base station subsystem is further configured to receive an indication from a mobile switching terminal of requesting the support capability information about the VAMOS technology of the mobile terminal, and send the enquiry message to the mobile terminal; and report the support capability information from the mobile terminal to the MSC simultaneously.

The method according to the disclosure is described below with reference to embodiments in detail.

Fig. 5 shows a flowchart of the first embodiment for acquiring a capability supporting VAMOS of a mobile terminal according to the disclosure. In the first embodiment, assuming that a network system uses an early classmark sending function, and the mobile terminal reports support capability information, which indicates whether a VAMOS technology is supported by itself, to a base station subsystem via a classmark change message in an early classmark sending procedure of call setup, as shown in Fig. 5, it comprises the following steps.

Step 500: in addition to completing functions specified by an existing protocol, the mobile terminal adds the support capability information indicating whether the VAMOS technology is supported by itself into the classmark change message as a field of mobile terminal classmark 3 to be sent to the base station subsystem.

The support capability information in this step can be represented by indicators shown in Table 1, and the indicators shown in Table 1 are configured to inform the base station subsystem whether the VAMOS technology is supported by the mobile terminal to be accessed.

**Table 1**

| | | | | | | | |
|---|---|---|---|---|---|---|---|
| 8 | 7 | 6 | 5 | 4 | 3 | 2 | 1 (indicator) |

In Table 1, one byte comprises 8 bits, wherein an indicator of the VAMOS capability occupies one bit, which is configured to indicate whether the VAMOS technology is supported by the mobile terminal. The value of the bit is shown in Table 2.

**Table 2**

| | |
|---|---|
| Indicator=0 | The VAMOS technology is not supported by the mobile terminal |
| Indicator=1 | The VAMOS technology is supported by the mobile terminal |

Furthermore, considering the continuous development and evolution of the VAMOS technology, and the continuous maturity of the technology, the state of the mobile terminal for supporting the VAMOS technology may be different, and the capabilities of different mobile terminals for supporting the VAMOS technology may be different. For example: some mobile terminals only support the primary VAMOS technology, which can be defined as technical grade 1, while some mobile terminals support the advanced VAMOS technology, which can be defined as technical grade 2, and the rest can be done in the same manner. Therefore, the support capability information about the VAMOS technology of the mobile terminal sent by the mobile terminal to the base station subsystem can also be represented by indicators shown in Table 3 optionally, and the Indicators are configured to inform the base station subsystem of the technical grade of the VAMOS technology supported by the mobile terminal.

**Table 3**

| | | | | | | | |
|---|---|---|---|---|---|---|---|
| 8 | 7 | 6 | 5 | 4 | 3 | 2 (indicator 2) | 1 (indicator 1) |

In Table 3, a VAMOS technical grade indicator occupies 2 bits, (more bits can be occupied with the increase in grade), which are configured to indicate the technical grade of the VAMOS technology supported by the mobile terminal. Here, the VAMOS technical grade indicator occupying 2 bits is taken as an example, the values and meanings thereof are as shown in Table 4.

**Table 4**

| | |
|---|---|
| indicator 2=0, indicator 1=0 | The VAMOS technology is not supported by the mobile terminal |
| Indicator 2=0, indicator 1=1 | Technical grade 1 of the VAMOS technology is supported by the mobile terminal |
| Indicator 2=1, indicator 1=0 | Technical grade 2 of the VAMOS technology is supported by the mobile terminal |
| indicator 2=1, indicator 1=1 | Technical grade 3 of the VAMOS technology is supported by the mobile terminal |

Step 501: the base station subsystem acquires the state of the mobile terminals for supporting the VAMOS technology according to the support capability information included in the classmark change message reported by the mobile terminal.

It should be noted that, the classmark change message including the support capability information to be reported Is described as an example in the embodiment, which is not intended to limit the scope of protection of the disclosure. The support capability information can also be included in a custom message or other current message, as long as the base station subsystem is informed of the capability supporting the VAMOS technology of the mobile terminal.

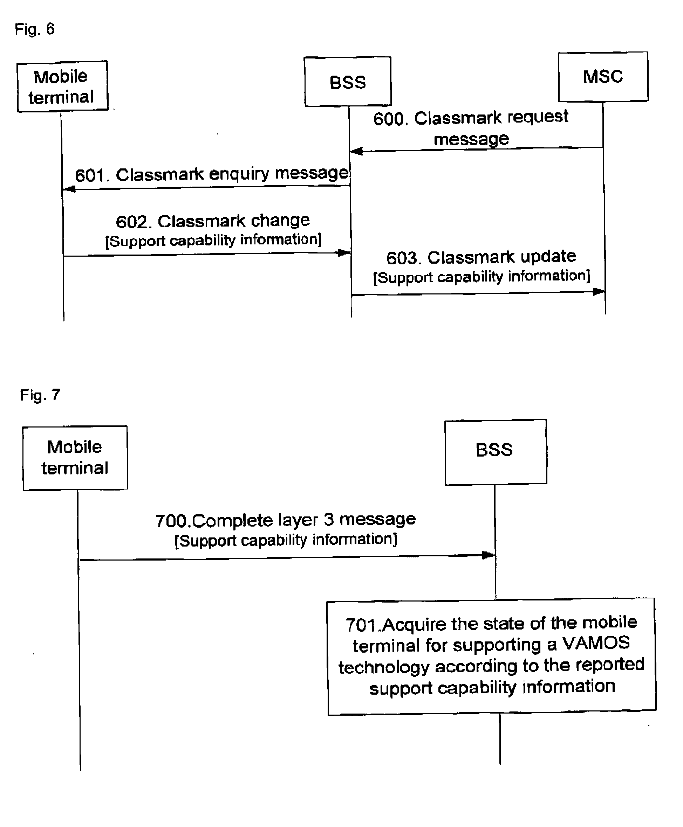

Fig. 6 shows a flowchart of the second embodiment for acquiring a capability supporting VAMOS of a mobile terminal according to the disclosure. In the second embodiment, assuming that a network system does not use an early classmark sending function, namely in a dedicated mode, as shown in Fig. 6, it comprises the following steps.

Step 600: in the dedicated mode, an MSC sends a classmark request message to a base station subsystem for a specific mobile terminal.

Step 601: after receiving the classmark request message, the base station subsystem sends a classmark enquiry message to the mobile terminal.

Step 602: after receiving the classmark enquiry message, the mobile terminal adds support capability information indicating whether a VAMOS technology is supported by itself into a classmark change message as a field of mobile terminal classmark 3 to be reported to the base station subsystem.

Step 603: after receiving the classmark change message, the base station subsystem acquires the state of the mobile terminal for supporting the VAMOS technology. Then the base station subsystem adds the acquired support capability information into a classmark update message to send to the MSC.

Fig. 7 shows a flowchart of the third embodiment for acquiring a capability supporting VAMOS of a mobile terminal according to the disclosure. In the third embodiment, assuming that a mobile terminal reports support capability information indicating whether a VAMOS technology is supported by itself as a field of mobile terminal classmark 2 to a base station subsystem, as shown in Fig. 7, it comprises the following steps.

Step 700: in addition to completing functions specified by an existing protocol, when the mobile terminal sends a complete layer 3 message to the base station subsystem, the mobile terminal adds the support capability information indicating whether the VAMOS technology is supported by itself into the complete layer 3 message as a field of the mobile terminal classmark 2 to be sent to the base station subsystem.

In this step, if the mobile terminal is a calling party, the support capability information is included in a CM service request message to the base station subsystem; if the mobile terminal is a called party, the support capability Information is included in a paging response message to the base station subsystem.

Step 701: the base station subsystem acquires the state of the mobile terminal for supporting the VAMOS technology according to the support capability information included in the complete layer 3 message reported by the mobile terminal.

## Claims

1. A method for acquiring a capability information for supporting Voice services over Adaptive Multi-user channels on One Slot, VAMOS of a mobile terminal, **characterized in that** comprising:
informing a base station subsystem of support capability information about a VAMOS technology of itself by the mobile terminal (S300) via a custom message or a current message, wherein the support capability information includes technical grade of the VAMOS technology; and
acquiring a capability supporting the VAMOS technology of the mobile terminal according to the acquired support capability information by the base station subsystem (S301);
wherein the informing the base station subsystem of the support capability information by the mobile terminal comprises one of the following:
reporting the support capability information indicating whether th VAMOS technology is supported by itself to the base station subsystem as a field of mobile terminal classmark 3 via a classmark change message by the mobile terminal; or
adding the support capability information indicating whether the VAMOS technology is supported by itself into a complete layer 3 message as a field of mobile terminal classmark 2 during a call setup procedure to be reported to the base station subsystem by the mobile terminal; or
after receiving a classmark request message from a core network, sending a classmark enquiry message to the mobile terminal by the base station subsystem; after receiving the classmark enquiry message, adding the support capability information indicating whether the VAMOS technology is supported by itself into a classmark change message as a field of mobile terminal classmark 3 to be reported to the base station subsystem by the mobile terminal; after receiving the classmark change message, adding the acquired support capability information into a classmark update message to be reported to a mobile switching centre by the base station subsystem.

2. The method according to claim 1, wherein if the mobile terminal is a calling party, the complete layer 3 message is a Call Management, CM service request message;
if the mobile terminal is a called party, the complete layer 3 message is a paging response message.

3. The method according to claim 1, wherein the support capability information is represented by one or more indicators of bit information.

4. The method according to claim 1, further comprising:
judging that the mobile terminal does not support the VAMOS technology by the base station subsystem when the mobile terminal does not report the support capability information about the VAMOS technology.

5. A system for acquiring a capability information for supporting Voice services over Adaptive Multi-user channels on One Slot, VAMOS, of a mobile terminal, comprising the mobile terminal, a base station subsystem and a core network;
**characterized in that**
the mobile terminal is configured to inform the base station subsystem of support capability information about a VAMOS technology of itself via a custom message or a current message, wherein the support capability information includes an indication on the technical grade of the VAMOS technology supported by the mobile terminal; and
the base station subsystem is configured to acquire whether the VAMOS technology is supported by the mobile terminal according to the support capability information reported by the mobile terminal;
wherein the mobile terminal is configured to report the support capability information indicating whether the VAMOS technology is supported by itself to the base station subsystem as a field of mobile terminal classmark 3 via a classmark change message; or
the mobile terminal is configured to add the support capability information indicating whether the VAMOS technology is supported by itself into a complete layer 3 message as a field of mobile terminal classmark 2 during a call setup procedure to be reported to the base station subsystem; or
a mobile switching centre in the core network, which is configured to send a classmark request requesting the support capability information about the VAMOS technology of the mobile terminal to the base station subsystem; and the base station subsystem is further configured to receive the classmark request message from the mobile switching center and send a classmark enquiry message to the mobile terminal, requesting the support capability information about the VAMOS technology of the mobile terminal, and the mobile terminal is adapted to add the supported capability information into a classmark update message to be reported to the mobile switching center via the base station subsystem.

## Patentansprüche

1. Verfahren zum Erfassen einer Information über eine Fähigkeit eines mobilen Endgerätes, Sprachdienste über adaptive Mehrbenutzerkanäle auf einem Slot (VAMOS) zu unterstützen, **dadurch gekennzeichnet, dass** es aufweist:
das Informieren eines Basisstation-Untersystems durch das mobile Endgerät (S300) über eine Information zur Unterstützungsfähigkeit über eine VAMOS-Technologie von ihm selbst mittels einer benutzerdefinierten Nachricht oder einer aktuellen Nachricht, wobei die Information zur Unterstützungsfähigkeit einen technischen Grad der VAMOS-Technologie enthält; und
das Erfassen einer Fähigkeit des mobilen Endgerätes, die VAMOS-Technologie zu unterstützen, gemäß der erfassten Information zur Unterstützungsfähigkeit durch das Basisstation-Untersystem (S301);
wobei das Informieren des Basisstation-Untersystems über die Information zur Unterstützungsfähigkeit durch das mobile Endgerät einen der nachfolgenden Schritte umfasst:
das Melden der Information zur Unterstützungsfähigkeit durch das mobile Endgerät, welche anzeigt, ob die VAMOS-Technologie von ihm selbst unterstützt wird, an das Basisstation-Untersystem als ein Classmark-3-Feld des mobilen Endgerätes, mittels einer Classmark-Änderungsnachricht; oder
das Hinzufügen der Information zur Unterstützungsfähigkeit, welche anzeigt, ob die VAMOS-Technologie von ihm selbst unterstützt wird, in eine vollständige Schicht-3-Nachricht als ein Classmark-2-Feld des mobilen Endgerätes während eines an das Basisstation-Untersystem zu meldenden Verbindungsaufbauvorgangs durch das mobile Endgerät; oder
nach dem Erhalten einer Classmark-Anforderungsnachricht von einem Kernnetzwerk, das Senden einer Classmark-Anfragenachricht zu dem mobilen Endgerät durch das Basisstation-Untersystem; nach dem Erhalten der Classmark-Anfragenachricht, das Hinzufügen der Information zur Unterstützungsfähigkeit, welche anzeigt, ob die VAMOS-Technologie von ihm selbst unterstützt wird, in eine an das Basisstation-Untersystem zu meldende Classmark-Änderungsnachricht als ein Classmark-3-Feld des mobilen Endgerätes durch das mobile Endgerät; nach dem Erhalten der Classmark-Änderungsnachricht, das Hinzufügen der erfassten Information zur Unterstützungsfähigkeit in eine an eine mobile Schaltzentrale zu meldende Classmark-Aktualisierungsnachricht durch das Basisstation-Untersystem.

2. Verfahren nach Anspruch 1, wobei die vollständige Schicht-3-Nachricht eine Call Management (CM) Serviceanforderungsnachricht ist, wenn das mobile Endgerät ein anrufender Teilnehmer ist; und die vollständige Schicht-3-Nachricht eine Paging-Antwortnachricht ist, wenn das mobile Endgerät ein angerufener Teilnehmer ist.

3. Verfahren nach Anspruch 1, wobei die Information zur Unterstützungsfähigkeit durch einen oder mehrere Indikatoren einer Bit-Information dargestellt wird.

4. Verfahren nach Anspruch 1, weiter umfassend:
das Beurteilen durch das Basisstation-Untersystem, dass das mobile Endgerät die VAMOS-Technologie nicht unterstützt, wenn das mobile Endgerät nicht die Information zur Unterstützungsfähigkeit über die VAMOS-Technologie meldet.

5. System zum Erfassen einer Information über eine Fähigkeit eines mobilen Endgerätes, Sprachdienste über adaptive Mehrbenutzerkanäle auf einem Slot (VAMOS) zu unterstützen, umfassend das mobile Endgerät, ein Basisstation-Untersystem und ein Kernnetzwerk, **dadurch gekennzeichnet, dass**
das mobile Endgerät derart ausgestaltet ist, das Basisstation-Untersystem über eine Information zur Unterstützungsfähigkeit über eine VAMOS-Technologie von ihm selbst mittels einer benutzerdefinierten Nachricht oder einer aktuellen Nachricht zu informieren, wobei die Information zur Unterstützungsfähigkeit eine Angabe über den technischen Grad der VAMOS-Technologie, die von dem mobilen Endgerät unterstützt wird, enthält; und
das Basisstation-Untersystem derart ausgestaltet ist, gemäß der durch das mobile Endgerät gemeldeten Information zur Unterstützungsfähigkeit zu erfassen, ob die VAMOS-Technologie von dem mobilen Endgerät unterstützt wird;
wobei das mobile Endgerät derart ausgestaltet ist, die Information zur Unterstützungsfähigkeit, welche anzeigt, ob die VAMOS-Technologie von ihm selbst unterstützt wird, an das Basisstation-Untersystem als ein Classmark-3-Feld des mobilen Endgerätes mittels einer Classmark-Änderungsnachricht zu melden; oder
das mobile Endgerät derart ausgestaltet ist, die Information zur Unterstützungsfähigkeit, die anzeigt, ob die VAMOS-Technologie von ihm selbst unterstützt wird, in eine vollständige Schicht-3-Nachricht als ein Classmark-2-Feld während eines an das Basisstation-Untersystem zu meldenden Verbindungsaufbauvorgangs hinzuzufügen; oder
eine mobile Schaltzentrale in dem Kernnetzwerk, die derart ausgestaltet ist, eine Classmark-Anforderung, die die Information zur Unterstützungsfähigkeit über die VAMOS-Technologie des mobilen Endgerätes anfordert, an das Basisstation-Untersystem zu senden; und das Basisstation-Untersystem ist weiter derart ausgestaltet, die Classmark-Anforderungs-Nachricht von der mobilen Schaltzentrale zu erhalten und eine Classmark-Anfrage-Nachricht an das mobile Endgerät zu senden, die die Information zur Unterstützungsfähigkeit über die VAMOS-Technologie des mobilen Endgerätes anfordert, und das mobile Endgerät dazu geeignet ist, die unterstützte Fähigkeitsinformation in eine über das Basisstation-Untersystem an die mobile Schaltzentrale zu meldende Classmark-Aktualisierungsnachricht hinzuzufügen.

## Revendications

1. Procédé pour acquérir une information de capacité pour supporter des services vocaux sur des canaux multi-utilisateurs adaptatifs sur un seul créneau, VAMOS (Voice services over Adaptive Multi-user channels on One Slot) d'un terminal mobile, **caractérisé en ce qu'**il comprend :
l'information d'un sous-système de station de base d'une information de capacité de support concernant une technologie VAMOS de lui-même par le terminal mobile (S300) via un message personnalisé ou un message courant, où l'information de capacité de support comprend un grade technique de la technologie VAMOS ; et
l'acquisition d'une capacité supportant la technologie VAMOS du terminal mobile selon l'information de capacité de support acquise par le sous-système de station de base (S301) ;
dans lequel l'information du sous-système de station de base de l'information de capacité de support par le terminal mobile comprend un de ce qui suit :
le rapport de l'information de capacité de support indiquant si la technologie VAMOS est supportée par lui-même au sous-système de station de base comme un champ de code de classe 3 de terminal mobile via un message de changement de code de classe par le terminal mobile ; ou
l'ajout de l'information de capacité de support indiquant si la technologie VAMOS est supportée par lui-même dans un message de couche 3 complet comme un champ de code de classe 2 de terminal mobile pendant une procédure d'établissement d'appel qui doit être rapportée au sous-système de station de base par le terminal mobile ; ou
après la réception d'un message de demande de code de classe en provenance d'un réseau coeur, l'envoi d'un message d'interrogation de code de classe au terminal mobile par le sous-système de station de base ; après la réception du message d'interrogation de code de classe, l'ajout de l'information de capacité de support indiquant si la technologie VAMOS est supportée par lui-même dans un message de changement de code de classe comme un champ de code de classe 3 de terminal mobile qui doit être rapporté au sous-système de station de base par le terminal mobile ; après la réception du message de changement de code de classe, l'ajout de l'information de capacité de support acquise dans un message de mise à jour de code de classe qui doit être rapporté à un centre de commutation mobile par le sous-système de station de base.

2. Procédé selon la revendication 1, dans lequel si le terminal mobile est une partie appelante, le message de couche 3 complet est un message de demande de service de gestion des appels, CM (Call Management) ;
si le terminal mobile est une partie appelée, le message de couche 3 complet est un message de réponse de radiomessagerie.

3. Procédé selon la revendication 1, dans lequel l'information de capacité de support est représentée par un ou plusieurs indicateurs d'information binaire.

4. Procédé selon la revendication 1, comprenant en outre :
le jugement que le terminal mobile ne supporte pas la technologie VAMOS par le sous-système de station de base lorsque le terminal mobile ne rapporte pas l'information de capacité de support concernant la technologie VAMOS.

5. Système pour acquérir une information de capacité pour supporter des services vocaux sur des canaux multi-utilisateurs adaptatifs sur un seul créneau, VAMOS (Voice services over Adaptive Multi-user channels on One Slot) d'un terminal mobile, comprenant le terminal mobile, un sous-système de station de base, et un réseau coeur ;
**caractérisé en ce que** le terminal mobile est configuré pour informer le sous-système de station de base d'une information de capacité de support concernant une technologie VAMOS de lui-même via un message personnalisé ou un message courant, où l'information de capacité de support comprend une indication sur le grade technique de la technologie VAMOS supportée par le terminal mobile ; et
le sous-système de station de base est configuré pour acquérir si la technologie VAMOS est supportée par le terminal mobile selon l'information de capacité de support rapportée par le terminal mobile ;
dans lequel le terminal mobile est configuré pour rapporter l'information de capacité de support indiquant si la technologie VAMOS est supportée par lui-même au sous-système de station de base comme un champ de code de classe 3 de terminal mobile via un message de changement de code de classe ; ou
le terminal mobile est configuré pour ajouter l'information de capacité de support indiquant si la technologie VAMOS est supportée par lui-même dans un message de couche 3 complet comme un champ de code de classe 2 de terminal mobile pendant une procédure d'établissement d'appel qui doit être rapportée au sous-système de station de base ; ou
un centre de commutation mobile dans le réseau coeur, qui est configuré pour envoyer une demande de code de classe demandant l'information de capacité de support concernant la technologie VAMOS du terminal mobile au sous-système de station de base ; et le sous-système de station de base est en outre configuré pour recevoir le message de demande de code de classe en provenance du centre de commutation mobile et envoyer un message d'interrogation de code de classe au terminal mobile, demandant l'information de capacité de support concernant la technologie VAMOS du terminal mobile, et le terminal mobile est adapté pour ajouter l'information de capacité supportée dans un message de mise à jour de code de classe qui doit être rapporté au centre de commutation mobile via le sous-système de station de base.
